# EUROPEAN PATENT SPECIFICATION

(11) **EP 3 330 111 B1**
(45) Date of publication and mention of the grant of the patent: **01.02.2023**
(21) Application number: 16201942.6
(22) Date of filing: 02.12.2016
(51) Int. Cl.: B60G 17/04

(54) **SUSPENSION SYSTEM FOR AN OFF-HIGHWAY VEHICLE**
AUFHÄNGUNGSSYSTEM FÜR EINEN GELÄNDEWAGEN
SYSTÈME DE SUSPENSION POUR UN VÉHICULE TOUT TERRAIN

(43) Date of publication of application: 06.06.2018
(73) Proprietor: Husco International, Inc., Waukesha, WI 53187 (US)
(72) Inventor: JERVIS, Mark, Lancashire (GB)
(74) Representative: Wynne-Jones IP Limited

(56) References cited:
- EP-A1- 1 757 470
- WO-A1-2008/017359
- WO-A1-2014/153730
- DE-A1- 10 107 631
- GB-A- 2 518 901
- US-A- 3 701 499
- US-A1- 2003 011 162
- US-A1- 2003 121 256
- US-A1- 2005 067 239
- US-A1- 2005 258 607
- US-A1- 2015 001 825

## Description

### BACKGROUND

The present disclosure relates generally to suspension systems and, more specifically, to systems and methods for a closed loop, double acting suspension for an off-highway vehicle.

The application of suspension systems in off-highway vehicles can improve the wear and tear on a vehicle by reducing the peak forces applied to the main structure. In some regions, e.g., Europe, legislation has been instituted that specifies a maximum vibration level a vehicle operator can experience. These, among other, factors have driven growth and development in the application of suspension systems on off-highway vehicles.

Examples of prior art include: US2003/011162 "Vehicle suspension control system", US2015/001825 "Vehicle Axle Suspension System", and US2005/067239 "Hydraulic-Pneumatic Suspension System". Further examples of suspension systems are shown in US2005/258607 A1, WO2008/017359 A1, DE 10 107631 A1, GB 2518901 A and US7497452 B2.

Document US2003/011162 discloses a suspension system according to claim 1 with the exception that it does not disclose a rod control orifice.

### SUMMARY OF THE INVENTION

The present invention provides a suspension system for an off-highway vehicle.

In one aspect, the present disclosure provides a suspension system for an off-highway vehicle. The suspension system is operable with a hydraulic actuator, the hydraulic actuator including a piston assembly slidably received within a hydraulic cylinder. The hydraulic actuator defines a piston side and a rod side each configured to receive a flow of fluid from a pump. The pump is configured to furnish fluid from a reservoir to a pump outlet. The suspension system includes a rod control valve having a rod inlet port and a rod work port, and a piston control valve having a piston inlet port and a piston work port. The suspension system further includes a rod control orifice arranged between the rod inlet port and the rod side, and a piston control orifice arranged between the piston inlet port and the piston side. The suspension system further includes a rod pilot operated check valve arranged between the rod control orifice and the rod side, and a piston pilot operated check valve arranged between the piston control orifice and the piston side. The suspension system further includes a load sense line arranged to communicate the greater of a pressure between the rod control orifice and the rod pilot operated check valve and a pressure between the piston control orifice and the piston pilot operated check valve to the pump. The pressure sensed by the load sense line controls a pump outlet pressure.

In some aspects, the rod control valve is moveable between a rod first position where fluid communication is provided from the pump outlet to the rod pilot operated check valve and a rod second position where fluid communication is provided from the rod pilot operated check valve to the reservoir.

In some aspects, the piston control valve is moveable between a piston first position where fluid communication is provided from the pump outlet to the piston pilot operated check valve and a piston second position where fluid communication is provided from the piston pilot operated check valve to the reservoir.

In some aspects, the rod pilot operated check valve is configured to provide fluid communication from the rod work port to the rod side when a predetermined pressure differential exists across the rod pilot operated check valve.

In some aspects, the suspension system further comprises a rod pilot line arranged to sense a pressure between the piston work port and the piston control orifice and communicate the pressure to the rod pilot operated check valve.

In some aspects, the rod pilot operated check valve is configured to provide fluid communication from the rod ride to the rod work port in response to the pressure sensed by the rod pilot line.

In some aspects, the piston pilot operated check valve is configured to provide fluid communication from the piston work port to the piston side when a predetermined pressure differential exists across the piston pilot operated check valve.

In some aspects, the suspension system further comprises a piston pilot line arranged to sense a pressure between the rod work port and the rod control orifice and communicate the pressure to the piston pilot operated check valve.

In some aspects, the piston pilot operated check valve is configured to provide fluid communication from the piston side to the piston work port in response to the pressure sensed by the piston pilot line.

In some aspects, the suspension system further comprises a piston accumulator in fluid communication with the piston side and arranged between the piston pilot operated check valve and the piston side, and a rod accumulator in fluid communication with the rod side and arranged between the rod pilot operated check valve and the rod side.

In some aspects, the suspension system further comprises a rod pressure sensor configured to communicate a pressure within the rod accumulator and/or the rod side to a controller.

In some aspects, the suspension system further comprises a piston pressure sensor configured to communicate a pressure within the piston accumulator and/or the piston side to a controller.

In some aspects, the suspension system further comprises a position sensor configured to measure a ride height of the off-highway vehicle.

In some aspects, the suspension system further includes an accelerometer couplable to the piston assembly.

In some aspects, the suspension system further comprises a controller in communication with the piston control valve, the rod control valve, and the position sensor.

In some aspects, the controller is configured to actuate the rod control valve between a rod first position and a rod second position and actuate the piston control valve between a piston first position and a piston second position in response to output data from the position sensor.

In some aspects, the controller is further configured to infer a suspension stiffness from the output data from the position sensor.

In some aspects, when the suspension stiffness is below a control limit, the controller is configured to actuate the piston control valve to the piston first position and the rod control valve to the rod first position.

In some aspects, when the suspension stiffness is above a control limit, the controller is configured to alternatingly actuate the piston control valve and the rod control valve.

In some aspects, when then ride height is below a control limit, the controller is configured to actuate the piston control valve to the piston first position.

In some aspects, when the ride height is above a control limit, the controller is configured to actuate the rod control valve to the rod first position.

In some aspects, the controller is configured to infer a suspension stiffness from the rod pressure sensor and the piston pressure sensor.

The foregoing and other aspects and advantages of the invention will appear from the following description. In the description, reference is made to the accompanying drawings which form a part hereof, and in which there is shown by way of illustration a preferred embodiment of the invention. Such embodiment does not necessarily represent the full scope of the invention, however, and reference is made therefore to the claims and herein for interpreting the scope of the invention.

### DESCRIPTION OF DRAWINGS

The invention will be better understood and features, aspects and advantages other than those set forth above will become apparent when consideration is given to the following detailed description thereof. Such detailed description makes reference to the following drawings
Fig. 1 is a schematic illustration of a suspension system according to one aspect of the present disclosure.
Fig. 2 is a schematic illustration of the suspension system of Fig. 1 with an alternative orifice arrangement.
Fig. 3 is a flow chart illustrating steps for operating the suspension system of Fig. 1 in a raise mode.
Fig. 4 is a flow chart illustrating steps for operating the suspension system of Fig. 1 in a lower mode.
Fig. 5 is a flow chart illustrating steps for operating the suspension system of Fig. 1 in an increase stiffness mode.
Fig. 6 is a flow chart illustrating steps for operating the suspension system of Fig. 1 in a decrease stiffness mode.
Fig. 7 is a flow chart illustrating steps for operating the suspension system of Fig. 1 in a main control mode.

### DETAILED DESCRIPTION OF THE INVENTION

Currently, suspension systems for off-highway vehicles may be in the form of a regenerative hydro-pneumatic suspension or a double acting hydro-pneumatic suspension. In general, regenerative suspension circuits can include fewer components and smaller accumulator volumes, when compared with double acting suspension circuits. However, regenerative suspension circuits can come with some inherent disadvantages. For example, low load performance, and relatively large variations in natural frequency and spring rate across the load range.

Typical double acting suspension systems include accumulators on both sides of the hydraulic actuator, which can prevent the cylinder from opening at low loads. If the rod side pressure is manipulated, in double acting suspension systems, it may be possible to significantly improve the spring rate and natural frequency change across the load range, thereby resulting in a better ride experience for the vehicle operator. However, typical double acting suspension circuits require additional components, which inherently increases cost and difficulties associated with packaging.

Due to the current deficiencies associated with current suspension systems, it would be desirable to have a simplified double acting suspension system configured to vary the rod side pressure, which can be enabled via electronic control, using fewer components to reduce system cost and packaging size. Such a simplified double acting suspension system may be particularly applicable in off-highway vehicles where packaging space is at a premium. Additionally, during operation, off-highway vehicles can experience dramatic axel load changes. In such off-highway vehicles, the volume of oil in the supporting side of the hydraulic actuator can be manipulated to maintain the ride height of the vehicle, regardless of the load. Therefore, the vehicle can still traverse the ground at highly productive speeds with full suspension movement available.

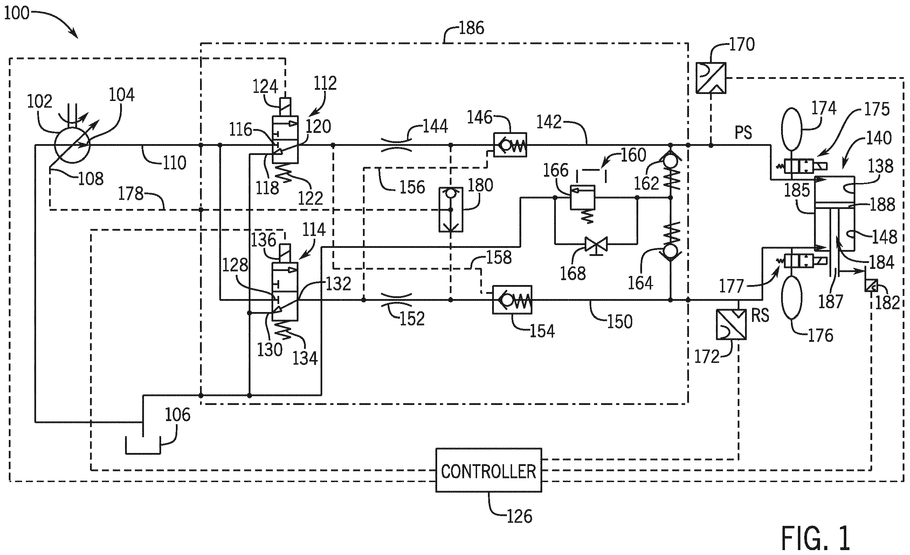

Fig. 1 illustrates one non-limiting example of a suspension system 100 according to one aspect of the present disclosure. The illustrated suspension system 100 can be in the form of a hydro-pneumatic, double acting suspension circuit configured to provide closed loop control on rod side pressure. The suspension system 100 can include a pump 102 having a pump outlet 104. The pump 102 can be configured to draw fluid, such as oil, from a reservoir 106 and furnish the fluid under increased pressure at the pump outlet 104. In the illustrated non-limiting example, the pump 102 may be a pressure compensated variable displacement pump. The pressure of the fluid provided at the pump outlet 104 can be responsive to a pressure signal at a load sense port 108. The pump 102 can be configured to maintain the pressure at the pump outlet 104 to be a constant differential, known as rated margin pressure, above the pressure sensed at the load sense port 108. The pump 102 can increase or decrease its displacement in order to maintain the rated margin pressure between the pump outlet 104 and the load sense port 108. In other non-limiting examples the pump 102 may be a fixed displacement pump and a bypass compensator (not shown) may be integrated into the suspension system 100 to maintain the pressure at the pump outlet 104 at a constant differential above the load sense pressure.

The pump outlet 104 can be in fluid communication with a supply conduit 110. The supply conduit 110 can be in fluid communication with a piston control valve 112 and a rod control valve 114. The illustrated piston control valve 112 and the rod control valve 114 can be in the form of 2 position, 3-way valves. As will be described below, the efficient design of the suspension system 100 can enable the piston control valve 112 and the rod control valve 114 to be controlled via an on/off signal and may not require, for example, a proportional current controller. These characteristics of the piston control valve 112 and the rod control valve 114 can enable the piston and rod control valves 112 and 114 to occupy a smaller size, provide reduced costs in the suspension system 100. The piston control valve 112 can include an piston inlet port 116, an piston outlet port 118, and a piston work port 120. The piston inlet port 116 can be in fluid communication with the supply conduit 110, and the piston outlet port 118 can be in fluid communication with the reservoir 106. The piston control valve 112 can be moveable between a first position where fluid communication is provided between the piston inlet port 116 and the piston work port 120, and a second position where fluid communication is provided between the piston work port 120 and the piston outlet port 118. The illustrated piston control valve 112 can be biased into the second position by a spring 122, and may be moveable between the first position and the second position by a solenoid 124. The solenoid 124 can be in electrical communication with a controller 126. The controller 126 can be configured to selectively signal the solenoid 124 to actuate the piston control valve 112 between the first position and the second position.

The rod control valve 114 can include an rod inlet port 128, an rod outlet port 130, and a rod work port 132. The rod inlet port 128 can be in fluid communication with the supply conduit 110, and the rod outlet port 130 can be in fluid communication with the reservoir 106. The rod control valve 114 can be moveable between a first position where fluid communication is provided between the rod inlet port 128 and the rod work port 132, and a second position where fluid communication is provided between the rod work port 132 and the rod outlet port 130. The illustrated rod control valve 114 can be biased into the second position by a spring 134, and may be moveable between the first position and the second position by a solenoid 136. The solenoid 136 can be in electrical communication with the controller 126. The controller 126 can be configured to selectively signal the solenoid 136 to actuate the rod control valve 114 between the first position and the second position.

The piston work port 120 of the piston control valve 112 can be in fluid communication with a piston side 138 of a hydraulic actuator 140 via a piston supply conduit 142. A piston control orifice 144 can be arranged on the piston supply conduit 142 between the piston work port 120 and a piston pilot operated check valve 146. The rod work port 132 of the rod control valve 114 can be in fluid communication with a rod side 148 of the hydraulic actuator 140 via a rod supply conduit 150. A rod control orifice 152 can be arranged on the rod supply conduit 150 between the rod work port 132 and a rod pilot operated check valve 154. In some non-limiting examples, the piston control orifice 144 and/or the rod control orifice 152 may be fixed orifices. In other non-limiting examples, the piston control orifice 144 and/or the rod control orifice 152 may be bi-directional orifices. That is, the piston control orifice 144 and/or the rod control orifice 152 may be configured to provide a different effective flow area when fluid passes in one direction relative to another direction. In some non-limiting examples, the piston control orifices 144 and/or the rod control orifice 152 may be variable orifices where an effective flow area may be varied, for example, via electrical communication with the controller 126. In some non-limiting examples, the suspension system 100 may include multiple orifices on the piston supply conduit 142 and/or the rod supply conduit 150, as will be described below. In some non-limiting examples, the piston control orifice 144 and/or the rod control orifice 152 may be integrated into the piston control valve 112 and/or the rod control valve 114, respectively. In these non-limiting examples, the piston and the rod control valves 112 and 114 may include multiple orifices arranged therein to provide alternative restrictions for fluid flowing toward the hydraulic actuator 140 and for fluid flowing from the hydraulic actuator 140. For example, the piston control orifice 144 may include one control orifice arranged between the piston inlet port 116 and the piston work port 120 in the first position and another control orifice arranged between the piston work port 120 and the piston outlet port 118 in the second position.

The piston pilot operated check valve 146 can lift off its seat to provide fluid communication therethrough by a pressure difference in a forward direction across the piston pilot operated check valve 146. That is, a pressure differential across the piston pilot operated check valve 146 in a direction from the piston work port 120 toward the piston side 138 can force the piston pilot operated check valve 146 off its seat. Additionally, the piston pilot operated check valve 146 can be lifted off its seat to provide fluid communication therethrough by a piston pilot signal sensed by a piston pilot line 156. The piston pilot line 156 can sense a pressure between the rod work port 132 and the rod control orifice 152 on the rod supply conduit 150.

The rod pilot operated check valve 154 can lift off its seat to provide fluid communication therethrough by a pressure difference in a forward direction across the rod pilot operated check valve 154. That is, a pressure differential across the rod pilot operated check valve 154 in a direction from the rod work port 132 toward the rod side 148 can force the rod pilot operated check valve 154 off its seat. Additionally, the rod pilot operated check valve 154 can be lifted off its seat to provide fluid communication therethrough by a rod pilot signal sensed by a rod pilot line 158. The rod pilot line 158 can sense a pressure between the piston work port 120 and the piston control orifice 144 on the piston supply conduit 142. In the non-limiting examples where the piston and rod control valves 112 and 114 include the piston and rod control orifices 144 and 152 arranged therein, the piston pilot line 156 can be arranged to sense a pressure between the piston inlet port 116 and the piston control orifice 144, and the rod pilot line 158 can be arranged to sense a pressure between the rod inlet port 128 and the rod control orifice 152.

The use and design of pilot operated check valves (i.e., the piston pilot operated check valve 146 and the rod pilot operated check valve 154) can provide superior leakage protection as the suspension system 100 is holding the load acting on the hydraulic actuator 140. That is, unless the piston and rod pilot operated check valves 146 and 154 are forced open via a pressure differential or a pilot signal, they are mechanically forced closed to prevent fluid flow therethrough.

A pressure relief valve 160 can be connected to the piston supply conduit 142 via a piston relief check valve 162 at a location between the piston pilot operated check valve 146 and the piston side 138. The pressure relief valve 160 can also be connected to the rod supply conduit 150 via a rod relief check valve 164 at a location between the rod pilot operated check valve 154 and the rod side 148. An outlet 166 of the pressure relief valve 160 can be in fluid communication with the reservoir 106. The pressure relief valve 160 can be configured to provide fluid communication between the piston supply conduit 142 and/or the rod supply conduit 150 and the reservoir to relieve the system pressure and prevent excessive pressures from damaging the suspension system 100. By fluidly connecting both the piston and rod supply conduits 142 and 150 to the pressure relief valve 160, the suspension system 100 can provide protection from over pressuring in both the piston side 138 and the rod side 148 of the hydraulic actuator 140. In addition, the design suspension system 100 (e.g., the functionality of the piston and rod pilot operated check valves 146 and 154 and the pressure relief valve 160) provides a mechanical fail safe (i.e., a mechanism to relieve pressure in the hydraulic actuator 140 to the reservoir 106) in the event of an electrical malfunction. It should be appreciated that, in other non-limiting examples, the suspension system 100 may include two separate pressure relief valves to independently relieve the pressure in the piston side 138 to the reservoir 106 and to relieve the pressure in the rod side 148 to the reservoir 106.

A manual override valve 168 can be configured to provide a bypass around the pressure relief valve 160 to enable the suspension system 100 to be manually relieved to the reservoir 106, for example, during servicing or calibration.

A piston pressure sensor 170 can be arranged to measure a pressure in the piston side 138 of the hydraulic actuator 140. It should be appreciated that the location of the piston pressure sensor 170 in Fig. 1 is not meant to be limiting in any way, and, in other non-limiting examples, the piston pressure sensor 170 can be arranged in any location capable of measuring the pressure in the piston side 138 of the hydraulic actuator 140. The piston pressure sensor 170 can be in electrical communication with the controller 126. A rod pressure sensor 172 can be arranged to measure a pressure in the rod side 148 of the hydraulic actuator 140. It should be appreciated that the location of the rod pressure sensor 172 in Fig. 1 is not meant to be limiting in any way, and, in other non-limiting examples, the rod pressure sensor 172 can be arranged in any location capable of measuring the pressure in the rod side 148 of the hydraulic actuator 140. The rod pressure sensor 172 can be in electrical communication with the controller 126.

A piston accumulator 174 can be connected to the piston supply conduit 142 adjacent to the piston side 138 of the hydraulic actuator 140 via a piston accumulator control valve 175. The piston accumulator control valve 175 can be selectively moveable between a first position and a second position. In the first position, the piston accumulator control valve 175 can provide fluid communication from the piston accumulator 174 to a location on the piston supply conduit 142 between the piston pilot operated check valve 146 and the piston side 138 of the hydraulic actuator 140. In the closed position, the piston accumulator control valve 175 can inhibit fluid communication between the piston accumulator 174 and the piston supply conduit 142. A rod accumulator 176 can be connected to the rod supply conduit 150 adjacent to the rod side 148 of the hydraulic actuator 140 via a rod accumulator control valve 177. The rod accumulator control valve 177 can be selectively moveable between a first position and a second position. In the first position, the rod accumulator control valve 177 can provide fluid communication from the rod accumulator 176 to a location on the rod supply conduit 150 between the rod pilot operated check valve 154 and the rod side 148 of the hydraulic actuator 140. In the closed position, the rod accumulator control valve 177 can inhibit fluid communication between the rod accumulator 176 and the rod supply conduit 150. The piston accumulator control valve 175 and the rod accumulator control valve 177 can be selectively actuated to the second position to isolate the piston and rod accumulators 174 and 176 from the suspension system 100.

The piston accumulator 174 and the rod accumulator 176 may be in the form of a hydro-pneumatic accumulators, which are pre-pressurized (i.e., pre-charged) to a desired pressure level with a gas. The gas within the piston accumulator 174 and the rod accumulator 176 may be compressed and decompressed by fluid flowing into and out of the piston and rod accumulators 174 and 176 as a load acting on the hydraulic actuator 140 varies. The compression and decompression of the gas within the piston accumulator 174 and rod accumulator 176 can act as a spring with a rising rate on the piston side 138 and the rod side 148 of the hydraulic actuator 140, respectively. In this way, the piston and rod accumulators 174 and 176 can provide suspension for the hydraulic actuator 140 and the components coupled thereto. As will be described, a stiffness of the suspension provided by the suspension system 100 may be correlated to the pressures within the piston and rod accumulators 174 and 176.

As described above, the pump 102 can be configured to maintain a rated margin pressure between the pump outlet 104 and the load sense port 108. The pressure at the load sense port 108 can be sensed by a load sense line 178. The load sense line 178 can include a shuttle valve 180 arranged thereon. The shuttle valve 180 can be in fluid communication with the piston supply conduit 142 at a location between the piston control orifice 144 and the piston pilot operated check valve 146, and can be in fluid communication with the rod supply conduit 150 at a location between the rod control orifice 152 and the rod pilot operated check valve 154. The shuttle valve 180 can be configured to communicate the highest of the pressure sensed from the piston supply conduit 142 and the pressure sensed from the rod supply conduit 150 to the load sense line 178 and thereby to the load sense port 108. The arrangement of the load sense on the suspension system 100 enables the pump 102 to operate at lower pressures thereby saving energy. That is, by communicating a pressure between the piston control orifice 144 and the piston pilot operated check valve 146 or a pressure between the rod control orifice 152 and the rod pilot operated check valve 154 to the load sense port 108, the pressure drop between the piston inlet port 116 and the piston pilot operated check valve 146 or between the rod inlet port 128 and the rod pilot operated check valve 154 can be equal to the rated margin pressure, depending on whether the pressure is higher in the piston supply conduit 142 or the rod supply conduit 150. This arrangement can enable the pump 102 to operate a lower pressures compared to if the pressure communicated to the load sense port 108 was between the piston work port 120 and the piston control orifice 144 and/or between the rod work port 132 and the rod control orifice 152.

A position sensor 182 can be arranged to measure a ride height of an off-highway vehicle on which the suspension system 100 is in use. For example, the position sensor 182 can be configured to measure a position of an axle of the off-highway vehicle relative to a chassis of the off-highway vehicle. In addition to the ride height, the position sensor 182 may provide data that can be correlated to a stiffness of the suspension system 100. For example, the data from the position sensors 182 as a function of time may enable the calculation of a frequency at which the suspension (i.e., the hydraulic actuator 140) is oscillating. The stiffness of the suspension may be inferred from the frequency at which the suspension is oscillating. Alternatively or additionally, the frequency of oscillation, which can provide the stiffness of the suspension system 100, may be inferred from an accelerometer (not shown). The accelerometer (not shown) may be coupled to a piston assembly 184 of the hydraulic actuator 140 or a mechanism associated with a suspension linkage (i.e., any component mechanically coupled to the piston assembly 184).

The position sensor 182 can be in electrical communication with the controller 126. It should be appreciated that various arrangements for the position sensor 182 are possible so long as the relative position of the axle relative to the chassis on the off-highway vehicle can be measured and transmitted to the controller 126. The illustrated position sensor 182 can be coupled to the piston assembly 184 of the hydraulic actuator 140. It should be appreciated that the position sensor 182 can be arranged anywhere on a structure or linkage that can displace in proportion to the relative position, for example, between a chassis and an axle on an off-highway vehicle. That is, in other non-limiting examples, the position sensor 182 may be arranged on a mechanism associated with a suspension linkage, which is coupled to the piston assembly 184. The piston assembly 184 can be slidably received within a hydraulic cylinder 185 and can include a rod 187 coupled to a piston 188.

In some non-limiting examples, certain the components of the suspension system 100 may be integrated into a control valve, or manifold, 186. Although the piston and rod pressure sensors 170 and 172 are illustrated outside of the control valve 186, it should be appreciated that, in other non-limiting examples, the piston pressure sensor 170 and/or the rod pressure sensor 172 may be arranged within the control valve 186.

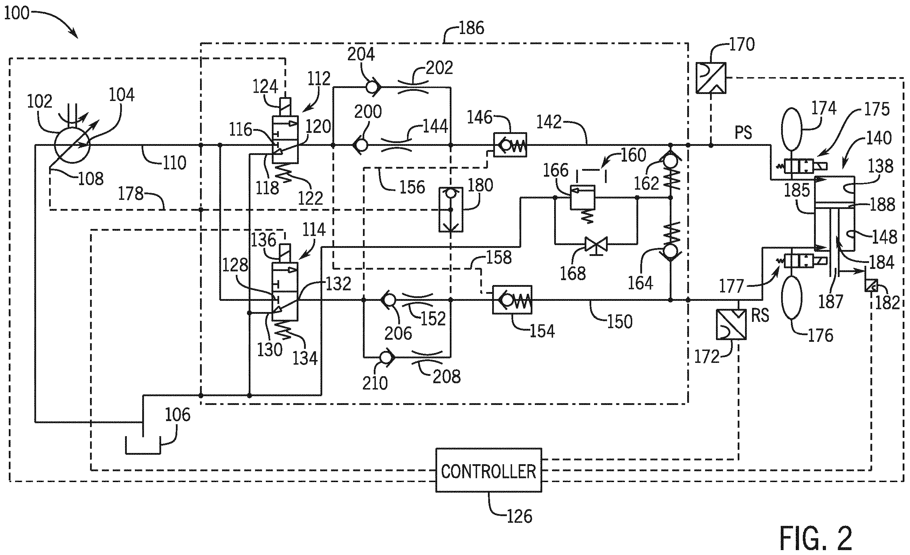

Fig. 2 illustrates another non-limiting example of the suspension system 100 with an alternative orifice configuration. As shown in Fig. 2, the suspension system 100 may include a first piston orifice check valve 200, a second piston control orifice 202, and a second piston orifice check valve 204, as shown in Fig. 2. The first piston orifice check valve 200 can be arranged between the piston control valve 112 and the piston control orifice 144. The first piston orifice check valve 200 can be configured to only allow fluid to flow in a direction from the piston control valve 112 to the piston control orifice 144. The second piston orifice check valve 204 can be arranged between the piston control valve 112 and the second piston control orifice 202 and can be configured to only allow fluid to flow in a direction from the second piston control orifice 202 to the piston control valve 112. This arrangement can enable fluid flow into the piston side 138 to flow through a different orifice than fluid flowing from the piston side 138. For example, the piston control orifice 144 may define a different flow area than the second piston control orifice 202.

Similarly, the suspension system 100 may include a first rod orifice check valve 206, a second rod control orifice 208, and a second rod orifice check valve 210. The first rod orifice check valve 206 can be arranged between the rod control valve 114 and the rod control orifice 152. The first rod orifice check valve 206 can be configured to only allow fluid to flow in a direction from the rod control valve 114 to the rod control orifice 152. The second rod orifice check valve 210 can be arranged between the rod control valve 114 and the second rod control orifice 208 and can be configured to only allow fluid to flow in a direction from the second rod control orifice 208 to the rod control valve 114. This arrangement can enable fluid flow into the rod side 148 to flow through a different orifice than fluid flowing from the rod side 148. For example, the rod control orifice 152 may define a different flow area than the second rod control orifice 208.

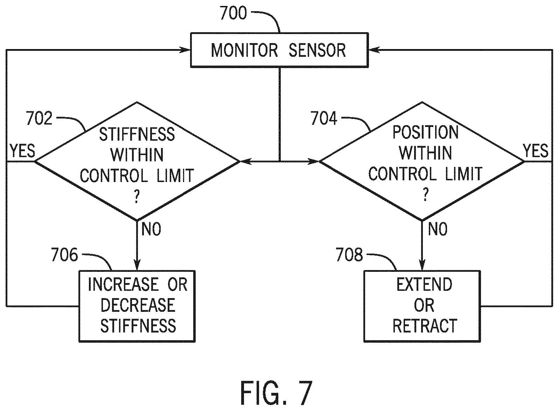

In some non-limiting examples, the hydraulic actuator 140 can be integrated into an off-highway vehicle such that a load of the off-highway vehicle between a chassis of the vehicle and an axle of the vehicle can be supported either directly or via a mechanism on the piston side 138 of the hydraulic actuator 140. As described above, in off-highway vehicles, the volume of oil in the supporting side of the hydraulic actuator (the piston side 138 in the illustrated non-limiting example) can be manipulated to maintain the ride height of the vehicle, regardless of the load. Therefore, the vehicle can still traverse the ground at highly productive speeds with full suspension movement available. Operation of the suspension system 100 will be described with reference to Figs. 1-6 during raising and lowering of a ride height of an off-highway vehicle (i.e., a relative position between the axle and the chassis of the off-highway vehicle), and during increasing and decreasing of a stiffness provided by the suspension system 100. It should be appreciated that although the raise/lower modes and increase/decrease stiffness modes are described separately, in application, they may operate together. This combined operation will be described with reference to Fig 7.

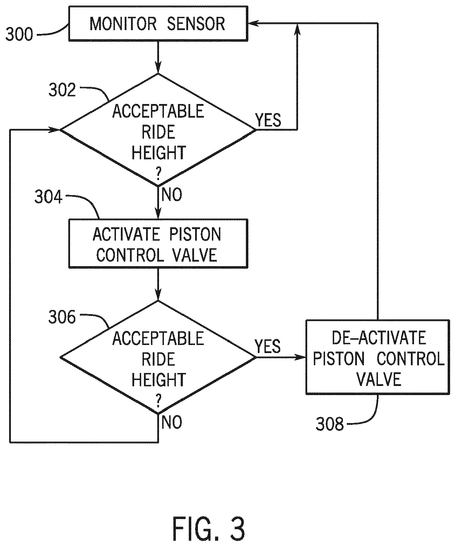

With reference to Figs. 1 and 3, if a ride height of the off-highway vehicle is too low, the suspension system 100 can operate in a raise mode. Initially, a sensor can be monitored at step 300 to detect a ride height of the off-highway vehicle. In some non-limiting examples, the monitored sensor may be the position sensor 182. As the sensor is monitored at step 300, it can be determined if ride height of the off-highway vehicle is acceptable at step 302. If it is determined at step 302 that the ride height is acceptable, the sensor can continue to be monitored at step 300. If it is determined at step 302 that the ride height is too low and needs to be raised, the controller 126 can command the solenoid 124 to actuate the piston control valve 112 to the first position where fluid communication is provided between the piston inlet port 116 and the piston work port 120, at step 304. As the piston control valve 112 moves to the first position, the pump 102 can begin to flow fluid from the pump outlet 104 through the piston control valve 112 and the piston control orifice 144. The pump pressure can be provided between the piston control orifice 144 and the piston pilot operated check valve 146 where it can be supplied to the shuttle valve 180. This pump pressure can be supplied from the shuttle valve 180 to the load sense line 178 and thereby to the load sense port 108. The pump pressure at the pump outlet 104 can continue to rise until the rated margin pressure differential is reached between the pump outlet 104 and the load sense port 108. In this way, the effective pressure differential across the piston control valve 112 and the piston control orifice 144 can be fixed, and the corresponding flow to the piston side 138 of the hydraulic actuator 140 can also be fixed according to the rated margin pressure and the relative effective flow areas of the piston control orifice 144 and across the piston control valve 112.

Once the pressure upstream of the piston pilot operated check valve 146 reaches a predetermined level (i.e., a pressure difference in a forward direction across the piston pilot operated check valve 146), the piston pilot operated check valve 146 can lift off its seat and allow fluid to flow to the piston accumulator 174 and the piston side 138 of the hydraulic actuator 140, thereby causing the hydraulic actuator 140 to extend at step 304. Simultaneously, the rod pilot signal sensed by the rod pilot line 158 can cause the rod pilot operated check valve 154 to lift off its seat, and can then allow fluid to flow from the rod side 148 of the hydraulic actuator 140 and the rod accumulator 176 through the rod control valve 114, which can be in the second position, and the rod control orifice 152 to the reservoir 106. With the rod side 148 and the rod accumulator 176 vented to the reservoir 106, the piston assembly 184 within the hydraulic actuator 140 can extend from the hydraulic cylinder 185 thereby raising a ride height of the off-highway vehicle. The rod control orifice 152 can be sized (i.e., define a specifically sized effective flow area) such that a pressure in the rod accumulator 176 can decrease during this extend operation. It follows that the pressure in the piston accumulator 174 can also decrease during the extend operation due to the lower pressure in the rod accumulator 176.

As the piston assembly extends at step 304, it can be determined if the ride height raises to an acceptable value at step 306, for example, based on input from the position sensor 182. If not, the piston control valve 112 can remain actuated into the first position at step 304. If so, the piston control valve 112 can be de-activated at step 308 thereby actuating the piston control valve 112 back to the second position where fluid communication is inhibited between the pump outlet 104 and the piston side 138. With the piston control valve 112 back in the second position, the pressure sensed by the rod pilot line 158 may be vented to the reservoir 106 and, therefore, the rod pilot operated check valve 154 may close and inhibit fluid communication from the rod side 148 to the reservoir 106. Thus, both of the piston and rod pilot operated check valves 146 and 154 may be closed and the suspension system 100 may hold the load acting on the hydraulic actuator 140. The spring-like damping provided by the piston and rod accumulators 174 and 176 can provide a suspended, smooth ride for an operator of the off-highway vehicle, while the suspension system 100 is holding the load. The sensor can continually be monitored at step 300 to determine if the ride height becomes out of position at step 302. If so, the controller 126 can detect the error and again set the suspension system 100 to the raise mode, as described above.

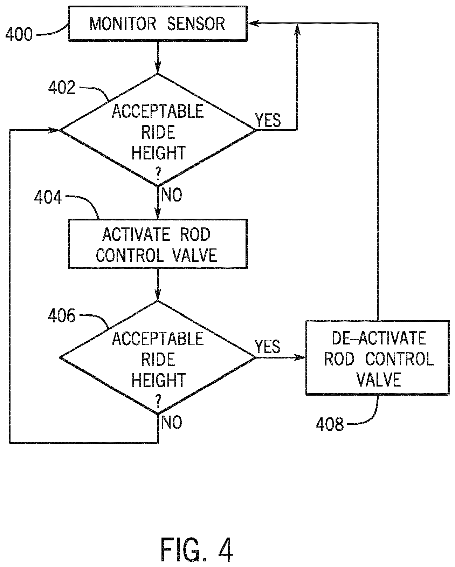

Turning to Figs. 1 and 4, if a ride height of the off-highway vehicle is too high, the suspension system 100 can operate in a lower mode. Initially, a sensor can be monitored at step 400 to detect a ride height of the off-highway vehicle. In some non-limiting examples, the monitored sensor may be the position sensor 182. As the sensor is monitored at step 400, it can be determined if the ride height of the off-highway vehicle is acceptable at step 402. If it is determined at step 402 that the ride height is acceptable, the sensor can continue to be monitored at step 400. If it is determined at step 402 that the ride height is too high and needs to be lowered, the controller 126 can command the solenoid 136 to actuate the rod control valve 114 to the first position where fluid communication is provided between the rod inlet port 128 and the rod work port 132, at step 404. As the rod control valve 114 moves to the first position, the pump 102 can begin to flow fluid from the pump outlet 104 through the rod control valve 114 and the rod control orifice 152. The pump pressure can be provided between the rod control orifice 152 and the rod pilot operated check valve 154 where it can be supplied to the shuttle valve 180. This pump pressure can be supplied from the shuttle valve 180 to the load sense line 178 and thereby to the load sense port 108. The pump pressure at the pump outlet 104 can continue to rise until the rated margin pressure differential is reached between the pump outlet 104 and the load sense port 108. In this way, the effective pressure differential across the rod control valve 114 and the rod control orifice 152 can be fixed, and the corresponding flow to the rod side 148 of the hydraulic actuator 140 can also be fixed according to the rated margin pressure and the relative effective flow areas of the rod control orifice 152 and across the rod control valve 114.

Once the pressure upstream of the rod pilot operated check valve 154 reaches a predetermined level (i.e., a pressure difference in a forward direction across the rod pilot operated check valve 154), the rod pilot operated check valve 154 can lift off its seat and allow fluid to flow to the rod accumulator 176 and the rod side 148 of the hydraulic actuator 140, thereby causing the hydraulic actuator 140 to retract at step 404. Simultaneously, the piston pilot signal sensed by the piston pilot line 156 can cause the piston pilot operated check valve 146 to lift off its seat, and can then allow fluid to flow from the piston side 138 of the hydraulic actuator 140 through the piston control valve 112, which can be in the second position, and the piston control orifice 144 to the reservoir 106. With the piston side 138 and the piston accumulator 174 vented to the reservoir 106, the piston assembly 184 within the hydraulic actuator 140 can retract into the hydraulic cylinder 185, which can be aided by the load acting on the piston assembly 184. As the piston assembly 184 retracts into the hydraulic cylinder 185, the ride height of the off-highway vehicle can lower. The piston control orifice 144 can be sized (i.e., define a specifically sized effective flow area) such that a pressure within the rod accumulator 176 can either stay generally constant or increase slightly, depending on the sizing of the rod control orifice 152.

As the piston assembly retracts at step 404, it can be determined if the ride height lowers to an acceptable value at step 406, for example, based on input from the position sensor 182. If not, the rod control valve 112 can remain actuated into the first position at step 404. If so, the rod control valve 114 can be de-activated at step 408 thereby actuating the rod control valve 114 back to the second position where fluid communication is inhibited between the pump outlet 104 and the rod side 148. With the rod control valve 114 back in the second position, the pressure sensed by the piston pilot line 156 may be vented to the reservoir 106 and, therefore, the piston pilot operated check valve 146 may close and inhibit fluid communication from the piston side 138 to the reservoir 106. Thus, both of the piston and rod pilot operated check valves 146 and 154 may be closed and the suspension system 100 may hold the load acting on the hydraulic actuator 140. The spring-like damping provided by the piston and rod accumulators 174 and 176 can provide a suspended, smooth ride for an operator of the off-highway vehicle, while the suspension system 100 is holding the load. The sensor can continually be monitored at step 400 to determine if the ride height becomes out of position at step 402. If so, the controller 126 can detect the error and again set the suspension system 100 to the lower mode, as described above.

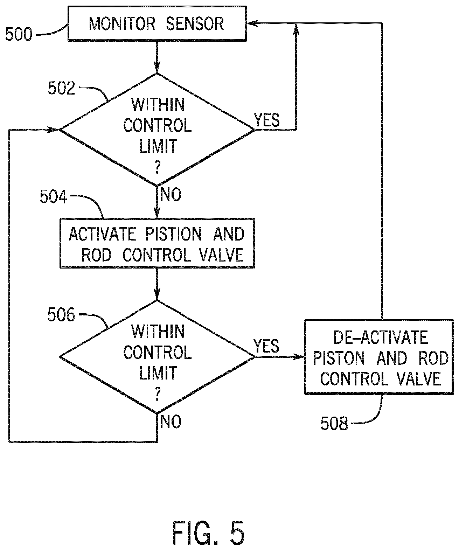

With reference to Figs. 1 and 5, if a suspension stiffness provided by the suspension system 100 to the off-highway vehicle is too low, the suspension system 100 can operate in an increase stiffness mode. The stiffness can be increased by increasing the pressure in the piston and rod accumulators 174 and 176. Initially, a sensor can be monitored at step 500 to detect a stiffness of the suspension system 100. In some non-limiting examples, the stiffness of the suspension system 100 monitored at step 500 may be inferred from the position sensor 182 or an accelerometer. In some non-limiting examples, the pressure of the rod accumulator 176 may be actively measured by the rod pressure sensor 172 and/or the pressure of the piston accumulator 174 may be actively measured by the piston pressure sensor 170. As the sensor is monitored at step 500, it can be determined if the stiffness of the suspension system 100 is within a predefined control limit at step 502. If it is determined at step 502 that the stiffness of the suspension system 100 is within the predefined control limit, the sensor can continue to be monitored at step 500. If it is determined at step 502 that the stiffness of the suspension system 100 is below the predefined control limit and needs to be increased, at step 504 the controller 126 can command the solenoids 124 and 136, of the piston and rod control valves 112 and 114, respectively, thereby actuating the piston and rod control valves 112 and 114 to the first position.

With the piston and rod control valves 112 and 114 actuated to the first position, fluid communication can be provided from the pump outlet 104 along the piston and rod supply conduits 142 and 150. Once the pressure differentials across the piston and rod pilot operated check valves 146 and 154 reach a predetermined level, the piston and rod pilot operated check valves 146 and 154 can lift off their seats and allow fluid to flow to the piston and rod accumulators 174 and 176. As fluid flows into the piston and rod accumulators 174 and 176, the pressures therein can increase thereby increasing the stiffness of the suspension system 100. Depending on the load acting on the hydraulic actuator 140 and the effective flow areas of the piston and rod control orifices 144 and 152, the piston assembly 184 may either extend from or retract into the hydraulic cylinder 185 as the stiffness is increased. Regardless of whether the piston assembly 184 extends or retracts, the controller 126 can monitor the position sensor 182 to avoid excessively raising or lowering the ride height during a stiffness changing operation.

As the stiffness of the suspension system 100 increases at step 504, it can be determined if the stiffness has increased to be within the predefined control limit at step 506. If not, the piston and rod control valves 112 and 114 can remain actuated into the first position at step 504. If so, the piston and rod control valves 112 and 114 can be de-activated at step 508 thereby actuating the piston and rod control valves 112 and 114 to the second position where fluid communication is inhibited between the pump outlet 104 and the piston and rod accumulators 174 and 176. In some non-limiting examples, the determination of the stiffness level at step 506 may be based on an inferred stiffness measured by the position sensor 182 or an accelerometer. In some non-limiting examples, the determination of the stiffness level at step 506 may be based on a pressure in the rod accumulator 176 and/or a pressure in the piston accumulator 174. That is, the piston and rod control valves 112 and 114 may remain actuated into the first position until a pressure measured by the rod pressure sensor 172 and/or a pressure measured by the piston pressure sensor 170 reaches a predetermined pressure level, which is correlated to the stiffness. Once the piston and rod control valves 112 and 114 are de-activated at step 508 and actuate to the second position, the pressures sensed by the piston and rod pilot lines 156 and 158 may be vented to the reservoir 106 and, therefore, the piston and rod pilot operated check valves 146 and 154. With both of the piston and rod pilot operated check valves 146 and 154 closed, the suspension system 100 may hold the load acting on the hydraulic actuator 140. The spring-like damping provided by the piston and rod accumulators 174 and 176, with the now increased stiffness, can provide a suspended, smooth ride for an operator of the off-highway vehicle, while the suspension system 100 is holding the load. The sensor can continually be monitored at step 500 to determine if the stiffness decreases outside of the predefined control limit at step 502. If so, the controller 126 can detect the error and again set the suspension system 100 to the increase stiffness mode, as described above.

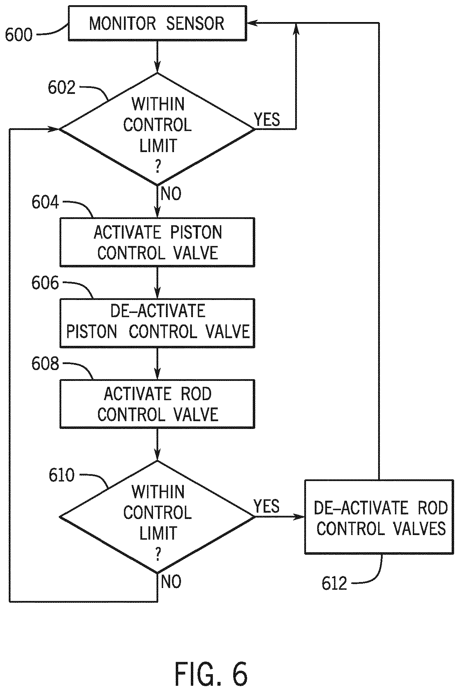

With reference to Figs. 1 and 6, if a suspension stiffness provided by the suspension system 100 to the off-highway vehicle is too high, the suspension system 100 can operate in a decrease stiffness mode. The stiffness can be decreased by decreasing the pressure in the piston and rod accumulators 174 and 176. Initially, a sensor can be monitored at step 600 to detect a stiffness of the suspension system 100. In some non-limiting examples, the stiffness of the suspension system 100 monitored at step 600 may be inferred from the position sensor 182 or an accelerometer. In some non-limiting examples, the pressure of the rod accumulator 176 may be actively measured by the rod pressure sensor 172 and/or the pressure of the piston accumulator 174 may be actively measured by the piston pressure sensor 170. As the sensor is monitored at step 600, it can be determined if the stiffness of the suspension system 100 is within a predefined control limit at step 602. If it is determined at step 602 that the stiffness of the suspension system 100 is within the predefined control limit, the sensor can continue to be monitored at step 600. If it is determined at step 602 that the stiffness of the suspension system 100 is above the predefined control limit and needs to be decreased, at step 604 the controller 126 can command the solenoid 124 to actuate the piston control valve 112 first position where fluid communication is provided between the piston inlet port 116 and the piston work port 120. As the piston control valve 112 moves to the first position, the pump 102 can begin to flow fluid from the pump outlet 104 through the piston control valve 112 and the piston control orifice 144. The pump pressure can be provided between the piston control orifice 144 and the piston pilot operated check valve 146 where it can be supplied to the shuttle valve 180. This pump pressure can be supplied from the shuttle valve 180 to the load sense line 178 and thereby to the load sense port 108. The pump pressure at the pump outlet 104 can continue to rise until the rated margin pressure differential is reached between the pump outlet 104 and the load sense port 108. In this way, the effective pressure differential across the piston control valve 112 and the piston control orifice 144 can be fixed, and the corresponding flow to the piston side 138 of the hydraulic actuator 140 can also be fixed according to the rated margin pressure and the relative effective flow areas of the piston control orifice 144 and across the piston control valve 112.

Once the pressure upstream of the piston pilot operated check valve 146 reaches a predetermined level (i.e., a pressure difference in a forward direction across the piston pilot operated check valve 146), the piston pilot operated check valve 146 can lift off its seat and allow fluid to flow to the piston accumulator 174 and the piston side 138 of the hydraulic actuator 140. Simultaneously, the rod pilot signal sensed by the rod pilot line 158 can cause the rod pilot operated check valve 154 to lift off its seat, and can then allow fluid to flow from the rod side 148 of the hydraulic actuator 140 and the rod accumulator 176 through the rod control valve 114, which can be in the second position, and the rod control orifice 152 to the reservoir 106. With the rod accumulator 176 and the rod side 148 vented to the reservoir 106, the pressure within the rod accumulator 176 can decrease and the piston assembly 184 can retract. The controller 126 can monitor the position sensor 182 during this operation to avoid excessively lowering the ride height during a stiffness changing operation. The piston control valve 112 can remain activated at step 504 for a predetermined amount of time. In some non-limiting example, the piston control valve 112 may remain activated until the pressure within the rod accumulator 176 reduces to a predetermined level. In some non-limiting examples, the piston control valve 112 may remain activated until the piston assembly 184 retracts a predetermined amount.

Once the piston control valve 112 has been activated for the predetermined amount of time at step 504, the piston control valve 112 can be de-activated at step 606, which can actuate the piston control valve 112 to the second position. The rod control valve 114 can then be activated at step 608, which can actuate the rod control valve 114 to the first position where fluid communication is provided between the rod inlet port 128 and the rod work port 132. As the rod control valve 114 moves to the first position, the pump 102 can begin to flow fluid from the pump outlet 104 through the rod control valve 114 and the rod control orifice 152. The pump pressure can be provided between the rod control orifice 152 and the rod pilot operated check valve 154 where it can be supplied to the shuttle valve 180. This pump pressure can be supplied from the shuttle valve 180 to the load sense line 178 and thereby to the load sense port 108. The pump pressure at the pump outlet 104 can continue to rise until the rated margin pressure differential is reached between the pump outlet 104 and the load sense port 108. In this way, the effective pressure differential across the rod control valve 114 and the rod control orifice 152 can be fixed, and the corresponding flow to the rod side 148 of the hydraulic actuator 140 can also be fixed according to the rated margin pressure and the relative effective flow areas of the rod control orifice 152 and across the rod control valve 114.

Once the pressure upstream of the rod pilot operated check valve 154 reaches a predetermined level (i.e., a pressure difference in a forward direction across the rod pilot operated check valve 154), the rod pilot operated check valve 154 can lift off its seat and allow fluid to flow to the rod accumulator 176 and the rod side 148 of the hydraulic actuator 140, thereby causing the hydraulic actuator 140 to retract at step 604. Simultaneously, the piston pilot signal sensed by the piston pilot line 156 can cause the piston pilot operated check valve 146 to lift off its seat, and can then allow fluid to flow from the piston side 138 of the hydraulic actuator 140 through the piston control valve 112, which can be in the second position, and the piston control orifice 144 to the reservoir 106. With the piston accumulator 174 and the piston side 138 vented to the reservoir 106, the pressure within the piston accumulator 174 can decrease and the piston assembly 184 can extend to counteract the retraction at step 604. Again, the controller 126 can monitor the position sensor 182 during this operation to avoid excessively raising the ride height during a stiffness changing operation. In some non-limiting examples, the rod control valve 114 can remain activated until the pressure within the piston accumulator 174 reduces to substantially equalize with the rod accumulator 176. In some non-limiting examples, the rod control valve 114 may remain activated until the piston assembly 184 extends the predetermined amount in which it retracted at step 604. In some non-limiting examples, the rod control valve 114 may remain activated the same predetermined amount of time that the piston control valve 112 was activated at step 604.

The cumulative effect of alternatingly activating of the piston control valve 112 and the rod control valve 114 can reduce the pressure within the piston accumulator 174 and the rod accumulator 176, thereby decreasing a stiffness provided by the suspension system 100. Once the rod control valve 114 has been activated for the predetermined amount of time, it can be determined if the stiffness of the suspension system 100 has decreased to within the predefined control limit at step 610. If not, the process can return to step 604 and the piston and rod control valves 112 and 114 can be alternatingly activated to further reduce the pressures within the piston and rod accumulators 174 and 176. If so, the rod control valve 114 can be de-activated at step 612 thereby actuating the rod control valve 114 back to the second position where fluid communication is inhibited between the pump outlet 104 and the rod side 148. With the rod control valve 114 back in the second position, the pressure sensed by the piston and rod pilot lines 156 and 158 may be vented to the reservoir 106 and, therefore, the piston and rod pilot operated check valves 146 and 154 may close and inhibit fluid communication from the piston and rod sides 138 and 148 to the reservoir 106. Thus, both of the piston and rod pilot operated check valves 146 and 154 may be closed and the suspension system 100 may hold the load acting on the hydraulic actuator 140. The spring-like damping provided by the piston and rod accumulators 174 and 176, with the now decreased stiffness, can provide a suspended, smooth ride for an operator of the off-highway vehicle, while the suspension system 100 is holding the load. The sensor can continually be monitored at step 600 to determine if the ride height becomes out of position at step 602. If so, the controller 126 can detect the error and again set the suspension system 100 to the decrease stiffness mode, as described above.

As noted above, the raise/lower modes and increase/decrease stiffness modes described above with reference to Figs. 3-6 may operate co-dependently. That is, a raising or lowering of the ride height may result in the stiffness needing adjustment. Likewise, increasing or decreasing the stiffness may result in the need to adjust the ride height. This combined operation can be illustrated in Fig. 7. As shown in Fig. 7, at step 700 one or more sensors may be monitored. In some non-limiting examples, the position sensor 182, an accelerometer, the piston pressure sensor 170, or the rod pressure sensor 172 may be monitored at step 700. In some non-limiting examples, the position sensor 182, an accelerometer, the piston pressure sensor 170, the rod pressure sensor 172, or a combination thereof may be monitored at step 700. Based on the input from the monitored senor(s) at step 700, it can be determined if the stiffness is within the predefined control limit at step 702 and/or it can be determined at if the ride height of the off-highway vehicle is acceptable at step 704. If it is determined at step 702 that the stiffness is not within the predefined control limit, the suspension system 100 may transition at step 706 to the increase or decrease stiffness mode, described above. If it is determined at step 704 that the ride height of the off-highway vehicle is not acceptable, the suspension system 100 may transition at step 708 to the raise or lower mode, described above. The sensor(s) may continually be monitored at step 700 if it is determined at step 702 that the stiffness is within the predefined control limit and/or if it is determined at step 704 that the ride height is acceptable.

In some non-limiting examples, one of determinations at step 702 and step 704 may act as a primary requirement and the other of the determinations at step 702 and step 704 may act as a secondary requirement. That is, the primary requirement may be triggered and inevitably be followed by the secondary requirement. For example, the off-highway vehicle may require a stiffness change at step 702 and the stiffness may be altered accordingly at step 706. This primary stiffness change may be followed by a secondary ride height adjustment at step 708. In some non-limiting examples, the determinations at steps 702 and 704 are not made subsequently, but may work in conjunction. For example, the suspension system 100 may be in the raise mode at step 708 and determine that a pressure in the rod accumulator 176 and/or the rod side 148 may be below of the predefined control limit and activate the rod control valve 114 to increase the pressure in the rod accumulator 176 and/or the rod side 148.

Within this specification embodiments have been described in a way which enables a clear and concise specification to be written, but it is intended and will be appreciated that embodiments may be variously combined or separated without parting from the invention. For example, it will be appreciated that all preferred features described herein are applicable to all aspects of the invention described herein.

Various features and advantages of the invention are set forth in the following claims.

## Claims

1. A suspension system (100) for an off-highway vehicle, the suspension system (100) is operable with a hydraulic actuator (140), the hydraulic actuator (140) including a piston assembly (184) slidably received within a hydraulic cylinder (185), the hydraulic actuator (140) defining a piston side (138) and a rod side (148) each configured to receive a flow of fluid from a pump (102), the pump (102) configured to furnish fluid from a reservoir (106) to a pump outlet (104), the suspension system (100) being **characterized in that** it comprises:
a rod control valve (114) including a rod inlet port (128) and a rod work port (132);
a piston control valve (112) including a piston inlet port (116) and a piston work port (120);
a rod control orifice (152) arranged between the rod inlet port (128) and the rod side (148);
a piston control orifice (144) arranged between the piston inlet port (116) and the piston side (138);
a rod pilot operated check valve (154) arranged between the rod control orifice (152) and the rod side (148);
a piston pilot operated check valve (146) arranged between the piston control orifice (144) and the piston side (138); and
a load sense line (178) arranged to communicate the greater of a pressure between the rod control orifice (152) and the rod pilot operated check valve (154) and a pressure between the piston control orifice (144) and the piston pilot operated check valve (146) to the pump (102), wherein the pressure sensed by the load sense line (178) controls a pump outlet (104) pressure.

2. The suspension system of claim 1, wherein the rod control valve (114) is moveable between a rod first position where fluid communication is provided from the pump outlet (104) to the rod pilot operated check valve (154) and a rod second position where fluid communication is provided from the rod pilot operated check valve (154) to the reservoir (106).

3. The suspension system of claim 1, wherein the piston control valve (144) is moveable between a piston first position where fluid communication is provided from the pump outlet to the piston pilot operated check valve (146) and a piston second position where fluid communication is provided from the piston pilot operated check valve (146) to the reservoir (106).

4. The suspension system of claim 1, wherein the rod pilot operated check valve (154) is configured to provide fluid communication from the rod work port (132) to the rod side (148) when a predetermined pressure differential exists across the rod pilot operated check valve (154).

5. The suspension system of claim 1, further comprising a rod pilot line (158) arranged to sense a pressure between the piston work port (120) and the piston control orifice (144) and communicate the pressure to the rod pilot operated check valve (154).

6. The suspension system of claim 5, wherein the rod pilot operated check valve (154) is configured to provide fluid communication from the rod side (148) to the rod work port (132) in response to the pressure sensed by the rod pilot line (158).

7. The suspension system of claim 1, wherein the piston pilot operated check valve (146) is configured to provide fluid communication from the piston work port (120) to the piston side (138) when a predetermined pressure differential exists across the piston pilot operated check valve (146).

8. The suspension system of claim 1, further comprising a piston pilot line (156) arranged to sense a pressure between the rod work port (132)and the rod control orifice (152) and communicate the pressure to the piston pilot operated check valve (146).

9. The suspension system of claim 8, wherein the piston pilot operated check valve (146) is configured to provide fluid communication from the piston side (138) to the piston work port (120) in response to the pressure sensed by the piston pilot line (156).

10. The suspension system of claim 1, further comprising a piston accumulator (174) in fluid communication with the piston side (138) and arranged between the piston pilot operated check valve (146) and the piston side (138), and a rod accumulator (176) in fluid communication with the rod side (148) and arranged between the rod pilot operated check valve (154) and the rod side (148).

11. The suspension system of claim 10, further comprising a rod pressure sensor (172) configured to communicate a pressure within the rod accumulator (176) and/or the rod side (148) to a controller (126).

12. The suspension system of claim 10, further comprising a piston pressure sensor (170) configured to communicate a pressure within the piston accumulator (174) and/or the piston side (138) to a controller (126).

13. The suspension system of claim 1, further comprising a position sensor (182) configured to measure a ride height of the off-highway vehicle.

14. The suspension system of claim 1, further comprising an accelerometer couplable to the piston assembly (184).

## Patentansprüche

1. Aufhängungssystem (100) für ein Geländefahrzeug, wobei das Aufhängungssystem (100) mit einem hydraulischen Aktuator (140) betriebsfähig ist, wobei der hydraulische Aktuator (140) eine Kolbenanordnung (184), die innerhalb eines Hydraulikzylinders (185) verschiebbar aufgenommen ist, einschließt, wobei der hydraulische Aktuator (140) eine Kolbenseite (138) und eine Stangenseite (148) definiert, die jeweils konfiguriert sind, um einen Fluidstrom von einer Pumpe (102) aufzunehmen, wobei die Pumpe (102) konfiguriert ist, um Fluid aus einem Reservoir (106) an einen Pumpenauslass (104) zu liefern; wobei das Aufhängungssystem (100) **dadurch gekennzeichnet ist, dass** es umfasst:
ein Stangenregelventil (114), das einen Stangeneinlassanschluss (128) und einen Stangenarbeitsanschluss (132) einschließt;
ein Kolbenregelventil (112), das einen Kolbeneinlassanschluss (116) und einen Kolbenarbeitsanschluss (120) einschließt;
eine Stangenregelöffnung (152), die zwischen dem Stangeneinlassanschluss (128) und der Stangenseite (148) eingerichtet ist;
eine Kolbenregelöffnung (144), die zwischen dem Kolbeneinlassanschluss (116) und der Kolbenseite (138) eingerichtet ist;
ein vorgesteuertes Stangenrückschlagventil (154), das zwischen der Stangenregelöffnung (152) und der Stangenseite (148) eingerichtet ist;
ein vorgesteuertes Kolbenrückschlagventil (146), das zwischen der Kolbenregelöffnung (144) und der Kolbenseite (138) eingerichtet ist; und
eine Lasterfassungsleitung (178), die eingerichtet ist, um den größeren von einem Druck zwischen der Stangenregelöffnung (152) und dem vorgesteuerten Stangenrückschlagventil (154) und einem Druck zwischen der Kolbenregelöffnung (144) und dem vorgesteuerten Kolbenrückschlagventil (146) zu der Pumpe (102) zu kommunizieren, wobei der Druck, der durch die Lasterfassungsleitung (178) erfasst wird, einen Pumpenauslass(104)druck regelt.

2. Aufhängungssystem nach Anspruch 1, wobei das Stangenregelventil (114) zwischen einer ersten Stangenposition, wo eine Fluidkommunikation von dem Pumpenauslass (104) zu dem vorgesteuerten Stangenrückschlagventil (154) bereitgestellt ist, und einer zweiten Stangenposition, wo die Fluidkommunikation von dem vorgesteuerten Stangenrückschlagventil (154) zu dem Reservoir (106) bereitgestellt ist, bewegbar ist.

3. Aufhängungssystem nach Anspruch 1, wobei das Kolbenregelventil (144) zwischen einer ersten Kolbenposition, wo die Fluidkommunikation von dem Pumpenauslass zu dem vorgesteuerten Kolbenrückschlagventil (146) bereitgestellt ist, und einer zweiten Kolbenposition, wo die Fluidkommunikation von dem vorgesteuerten Kolbenrückschlagventil (146) zu dem Reservoir (106) bereitgestellt ist, bewegbar ist.

4. Aufhängungssystem nach Anspruch 1, wobei das vorgesteuerte Stangenrückschlagventil (154) konfiguriert ist, um die Fluidkommunikation von dem Stangenarbeitsanschluss (132) zu der Stangenseite (148) bereitzustellen, wenn eine zuvor bestimmte Druckdifferenz über dem vorgesteuerten Stangenrückschlagventil (154) besteht.

5. Aufhängungssystem nach Anspruch 1, ferner umfassend eine Stangenvorsteuerleitung (158), die eingerichtet ist, um einen Druck zwischen dem Kolbenarbeitsanschluss (120) und der Kolbenregelöffnung (144) zu erfassen und den Druck zu dem vorgesteuerten Stangenrückschlagventil (154) zu kommunizieren.

6. Aufhängungssystem nach Anspruch 5, wobei das vorgesteuerte Stangenrückschlagventil (154) konfiguriert ist, um die Fluidkommunikation von der Stangenseite (148) zu dem Stangenarbeitsanschluss (132) als Reaktion auf den Druck, der durch die Stangenvorsteuerleitung (158) erfasst wird, bereitzustellen.

7. Aufhängungssystem nach Anspruch 1, wobei das vorgesteuerte Kolbenrückschlagventil (146) konfiguriert ist, um die Fluidkommunikation von dem Kolbenarbeitsanschluss (120) zu der Kolbenseite (138) bereitzustellen, wenn eine zuvor bestimmte Druckdifferenz über dem vorgesteuerten Kolbenrückschlagventil (146) besteht.

8. Aufhängungssystem nach Anspruch 1, ferner umfassend eine Kolbenvorsteuerleitung (156), die eingerichtet ist, um einen Druck zwischen dem Stangenarbeitsanschluss (132) und der Stangenregelöffnung (152) zu erfassen und den Druck an das vorgesteuerte Kolbenrückschlagventil (146) zu kommunizieren.

9. Aufhängungssystem nach Anspruch 8, wobei das vorgesteuerte Kolbenrückschlagventil (146) konfiguriert ist, um die Fluidkommunikation von der Kolbenseite (138) zu dem Kolbenarbeitsanschluss (120) als Reaktion auf den Druck, der durch die Kolbenvorsteuerleitung (156) erfasst wird, bereitzustellen.

10. Aufhängungssystem nach Anspruch 1, ferner umfassend einen Kolbenspeicher (174) in Fluidkommunikation mit der Kolbenseite (138) und der zwischen dem vorgesteuerten Kolbenrückschlagventil (146) und der Kolbenseite (138) eingerichtet ist und einen Stangenspeicher (176) in Fluidkommunikation mit der Stangenseite (148) und der zwischen dem vorgesteuerten Stangenrückschlagventil (154) und der Stangenseite (148) eingerichtet ist.

11. Aufhängungssystem nach Anspruch 10, ferner umfassend einen Stangendrucksensor (172), der konfiguriert ist, um einen Druck innerhalb des Stangenspeichers (176) und/oder der Stangenseite (148) zu einer Regelvorrichtung (126) zu kommunizieren.

12. Aufhängungssystem nach Anspruch 10, ferner umfassend einen Kolbendrucksensor (170), der konfiguriert ist, um einen Druck innerhalb des Kolbenspeichers (174) und/oder der Kolbenseite (138) zu einer Regelvorrichtung (126) zu kommunizieren.

13. Aufhängungssystem nach Anspruch 1, ferner umfassend einen Positionssensor (182), der konfiguriert ist, um eine Bodenfreiheit des Geländefahrzeugs zu messen.

14. Aufhängungssystem nach Anspruch 1, ferner umfassend einen Beschleunigungsmesser, der mit der Kolbenanordnung (184) koppelbar ist.

## Revendications

1. Système de suspension (100) pour véhicule hors route, le système de suspension (100) peut fonctionner avec un actionneur hydraulique (140), l'actionneur hydraulique (140) incluant un ensemble piston (184) reçu de manière coulissante à l'intérieur d'un vérin hydraulique (185), l'actionneur hydraulique (140) définissant un côté piston (138) et un côté tige (148) conçus chacun pour recevoir un écoulement de fluide depuis une pompe (102), la pompe (102) étant conçue pour fournir du fluide depuis un réservoir (106) vers une sortie de pompe (104), le système de suspension (100) étant **caractérisé en ce qu'**il comprend :
une soupape de commande de tige (114) incluant un orifice d'entrée de tige (128) et un orifice de travail de tige (132) ;
une soupape de commande de piston (112) incluant un orifice d'entrée de piston (116) et un orifice de travail de piston (120) ;
un orifice de commande de tige (152) disposé entre l'orifice d'entrée de tige (128) et le côté tige (148) ;
un orifice de commande de piston (144) disposé entre l'orifice d'entrée de piston (116) et le côté piston (138) ;
un clapet anti-retour actionné par pilote de tige (154) disposé entre l'orifice de commande de tige (152) et le côté tige (148) ;
une clapet anti-retour actionnée par pilote à piston (146) disposé entre l'orifice de commande de piston (144) et le côté piston (138) ; et
une ligne de détection de charge (178) disposée pour communiquer la plus grande partie d'une pression entre l'orifice de commande de tige (152) et le clapet anti-retour actionnée par pilote de tige (154) et une pression entre l'orifice de commande de piston (144) et le clapet anti-retour actionné par pilote à piston (146) à la pompe (102), dans lequel la pression détectée par la ligne de détection de charge (178) commande une pression de sortie de pompe (104).

2. Système de suspension selon la revendication 1, dans lequel la soupape de commande de tige (114) est mobile entre une première position de tige où une communication fluidique est fournie de la sortie de pompe (104) au clapet anti-retour actionné par pilote de tige (154) et une seconde position de tige où une communication fluidique est fournie depuis le clapet anti-retour actionné par pilote de tige (154) vers le réservoir (106).

3. Système de suspension selon la revendication 1, dans lequel la soupape de commande de piston (144) est mobile entre une première position de piston où une communication fluidique est fournie à partir de la pompe la sortie vers le clapet anti-retour à piston actionné par le pilote (146) et une seconde position de piston où une communication fluidique est fournie du clapet anti-retour actionné par pilote à piston (146) au réservoir (106).

4. Système de suspension selon la revendication 1, dans lequel le clapet anti-retour actionné par pilote de tige (154) est conçu pour fournir une communication fluidique depuis l'orifice de travail de tige (132) jusqu'au côté tige (148) lorsqu'une différence de pression prédéterminée existe à travers le clapet anti-retour actionné par pilote de tige (154).

5. Système de suspension selon la revendication 1, comprenant en outre une ligne pilote de tige (158) disposée pour détecter une pression entre l'orifice de travail de piston (120) et l'orifice de commande de piston (144) et communiquer la pression au clapet anti-retour actionné par pilote de tige (154).

6. Système de suspension selon la revendication 5, dans lequel le clapet anti-retour actionné par pilote de tige (154) est conçu pour fournir une communication fluidique du côté tige (148) à l'orifice de travail de tige (132) en réponse à la pression détectée par la ligne pilote de tige (158).

7. Système de suspension selon la revendication 1, dans lequel le clapet anti-retour actionné par pilote à piston (146) est conçu pour fournir une communication fluidique de l'orifice de travail de piston (120) au côté piston (138) lorsqu'une différence de pression prédéterminée existe à travers le clapet anti-retour à piston actionné par le pilote (146).

8. Système de suspension selon la revendication 1, comprenant en outre une ligne pilote à piston (156) disposée pour détecter une pression entre l'orifice de travail de tige (132) et l'orifice de commande de tige (152) et communiquer la pression au clapet anti-retour à piston actionné par le pilote (146).

9. Système de suspension selon la revendication 8, dans lequel le clapet anti-retour actionné par pilote à piston (146) est conçu pour fournir une communication fluidique du côté piston (138) à l'orifice de travail à piston (120) en réponse à la pression détectée par la ligne pilote à piston (156).

10. Système de suspension selon la revendication 1, comprenant en outre un accumulateur de piston (174) en communication fluidique avec le côté piston (138) et disposé entre le clapet anti-retour à piston actionné par le pilote (146) et le côté piston (138), et un accumulateur de tige (176) en communication fluidique avec le côté tige (148) et disposé entre le clapet anti-retour actionnée par pilote de tige (154) et le côté tige (148).

11. Système de suspension selon la revendication 10, comprenant en outre un capteur de pression de tige (172) configuré pour communiquer une pression à l'intérieur de l'accumulateur de tige (176) et/ou du côté tige (148) à un dispositif de commande (126).

12. Système de suspension selon la revendication 10, comprenant en outre un capteur de pression de piston (170) configuré pour communiquer une pression à l'intérieur de l'accumulateur de piston (174) et/ou du côté piston (138) à un dispositif de commande (126).

13. Système de suspension selon la revendication 1, comprenant en outre un capteur de position (182) configuré pour mesurer une hauteur de conduite du véhicule hors route.

14. Système de suspension selon la revendication 1, comprenant en outre un accéléromètre pouvant être couplé à l'ensemble piston (184).
